# EUROPEAN PATENT APPLICATION

(11) **EP 4 725 570 A1**
(43) Date of publication of application: **15.04.2026**
(21) Application number: 25208042.9
(22) Date of filing: 10.10.2025
(51) Int. Cl.: A63F 13/54, A61B 5/12, A63F 13/63, A63F 13/67, H04R 5/04

(54) **SYSTEM AND METHOD FOR MODIFYING VIDEO GAME AUDIO**

(30) Priority: 11.10.2024 GB 202415015
(71) Applicant: Sony Interactive Entertainment Inc., Tokyo 108-0075 (JP)
(72) Inventor: ARMSTRONG, Calum, London, W1F 7LP (GB); BUCHANAN, Christopher George, London, W1F 7LP (GB); SCHEMBRI, Danjeli, London, W1F 7LP (GB)
(74) Representative: Fish & Richardson P.C.

(57) **Abstract**

A computer-implemented method for modifying video game audio output using a video gaming system. The method comprises: obtaining a hearing loss profile associated with a user, the hearing loss profile defining a hear loss value varying with frequency; obtaining audio data to be output on a video gaming system, the audio data corresponding to an audio asset, the audio data comprising a plurality of frequency bands; determining, for each frequency band of the plurality of frequency bands, a respective loudness level; selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and applying, to each frequency band of the audio data, the respective modulation profiles using the hearing loss profile to generate modified video game audio.

## Description

### FIELD OF THE INVENTION

The present invention is in the field of video gaming systems and relates to systems and methods for modifying video game audio.

### BACKGROUND

Audio is a key contributor to user enjoyment when playing video games. Types of audio used in video games typically include background music, ambient sound during a video game scene, and voice chat with other users playing the same game. High-quality audio enhances the immersive experience and overall enjoyment of the game.

Many users, however, are affected by hearing loss or impairment, which can significantly impact their ability to hear video game audio and thus diminish their gaming experience.

Some users may have moderate to severe hearing loss. These individuals may use hearing aids, typically obtained via prescription. They often have access to an audiogram, which is a graph showing the user's hearing sensitivity across various frequencies, detailing their hearing profile. Despite the availability of hearing aids, these devices are generally incompatible with gaming systems, posing a challenge for this user group in accessing game audio effectively.

Other users have low to moderate hearing loss, often caused by aging or other factors such as tinnitus. This group is typically less likely to use prescription hearing aids, relying instead on other means to compensate for their hearing impairment.

There is a significant need to assist users affected by hearing loss or impairment in the video gaming context. Traditional hearing aids are designed with the assumption that a substantial portion of environmental audio is unimportant, focusing on amplifying certain key frequencies. In contrast, video game audio is meticulously curated, with each sound element intentionally included to enhance the gaming experience. Therefore, preserving as much of the audio as possible is crucial for maintaining the integrity and enjoyment of the game for users with hearing impairments.

Furthermore, existing hearing aid hardware is not compatible with video gaming systems and as such, their utility is limited in the context of video game audio quality.

There is therefore a need for a method that overcomes these issues and facilitates clearer audio whilst minimizing any loss of audio quality.

### SUMMARY OF INVENTION

In a first aspect of the invention, there is provided a computer-implemented method for modifying video game audio output using a video gaming system, the method comprising: obtaining a hearing loss profile associated with a user, the hearing loss profile defining a hearing loss value varying with frequency; obtaining audio data to be output on a video gaming system, the audio data corresponding to an audio asset, the audio data comprising a plurality of frequency bands; determining, for each frequency band of the plurality of frequency bands, a respective loudness level; selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and applying, to each frequency band of the audio data, the respective modulation profiles using the hearing loss profile to generate modified video game audio.

The "video game audio" may refer to audio data associated with a video game run on the video gaming system. The video game audio data may originate from one or more game files comprising game logic.

The "hearing loss profile" may be understood as data that describes how sensitive a user is to different frequencies.

The "audio asset" may be understood as an audio file storing digital audio data used in the video game, for example as part of game files on a storage device, such as a local storage device or a remote storage device. The audio asset is typically a digital signal. The audio asset may be stored according to the Audio Definition Model (ADM), such that the audio data includes metadata information such as audio channels, audio positioning, and rendering information.

The "loudness level" may refer to a range of amplitudes or "loudness" that the frequency band falls within.

The "modulation profile" may be understood as a gain curve configured to provide gain values to be applied depending on hearing loss levels (e.g., as provided by the hearing loss profile).

In the present invention, audio assets may be easily accessible from the video game files and may comprise a digital signal. A frequency band of the video game audio asset may be modified by a modulation profile determined or selected based on the loudness level of the frequency band. Depending on the loudness level (e.g., a high or low loudness level) of the frequency band, a different modulation profile is determined or selected. The modification of the frequency band is also dependent on the hearing loss profile associated with the user. Accordingly, the present invention may provide a means for modifying a video game audio asset according to a user's hearing loss profile, whilst also taking the loudness levels of frequency bands into account. Advantageously, the present invention may provide a modified video game audio asset that is adapted to the user's unique hearing loss profile for different frequency bands and is dependent on the loudness of the frequency bands, thereby providing clearer audio whilst minimizing any loss of audio quality.

In some embodiments, the method further comprises: identifying an audio asset type of the audio asset; and modifying the modulation profiles based on the audio asset type prior to applying, to each frequency band of the audio data, the respective modulation profiles using the hearing loss profile to generate modified video game audio. The "audio asset type" may refer to a type, or intended use, of the audio asset. Example types of audio asset include sound effect audio assets, music track audio assets, and dialogue audio assets. It will be appreciated that many more audio asset types exist.

Modifying the modulation profiles may refer to altering or varying the modulation profiles that have been selected, depending on the audio asset type. In this way, different audio assets can be boosted or modulated depending on the type of audio asset. Advantageously, some audio assets may be prioritised over other audio assets.

In some embodiments, identifying the audio asset type of the audio asset comprises analysing the audio data. In some implementations, metadata of the audio asset audio data may explicitly indicate the audio asset type. In such cases, analysing the audio data may comprise parsing the metadata to extract the audio asset type. In other implementations, the metadata may not explicitly indicate the audio asset type. In these implementations, analysing the audio data comprises applying an audio asset type identification algorithm to the audio data. For example, a trained machine learning model may take, as input, properties of the audio data, and output a classification indicative of the type of audio asset. The properties of the audio data may include, but is not limited to including, a duration (typically short for sound effect audio assets and longer for background music audio assets) of the audio asset; a frequency content of the audio asset; and a tempo of the audio asset. Alternatively, a convolutional neural network may take an input spectrogram and output a classification indicative of the type of audio asset.

In some embodiments, the method further comprises: obtaining spatial data associated with the audio asset; and modifying the modulation profiles based on the spatial data prior to applying, to each frequency band of the audio data, the respective modulation profiles using the hearing loss profile to generate modified video game audio. The spatial data can typically be accessed or obtained via run-time game data, or a software development kit (SDK) associated with the video game system Additionally or alternatively, the game files comprising the audio asset may also include positioning data linking the audio asset to an in-game object or event. The positioning data provides spatial data indicating a 3D position of the object and, by extension, the audio asset. This embodiment may be of particular utility in a 3D audio context. Modifying the modulation profiles can comprise boosting modulation profiles associated with audio assets within a player's field of view (FOV). In this way, audio assets within the player's FOV (which are typically more important than audio assets located outside the player's FOV) may be more distinguishable. Advantageously the user may more easily distinguish audio assets that are more important than audio assets located outside the player's FOV.

In some embodiments, modifying the modulation profiles comprises: determining a field of view (FOV); and modifying the modulation profiles based on the FOV and the spatial data. For example, an audio asset may be associated with an object (e.g., a non-player character) or other feature having a location (as provided by the spatial data) in a player's FOV. Such an audio asset may therefore be more "important" to the overall experience of gameplay, at least because the user's attention is generally around that object or feature. Thus, modifying the modulation profiles of this audio asset, for example by applying a boost to the modulation profiles, can make the audio asset more distinguishable, thereby advantageously improving user experience.

In some embodiments, the method further comprises: identifying a gameplay event associated with the audio asset; and modifying the modulation profiles based on the gameplay event prior to applying, to each frequency band of the audio data, the respective modulation profiles using the hearing loss profile to generate modified video game audio. The game files comprising the audio asset may also include timeline or sequence assets that control the timing and synchronization of the audio asset with gameplay events. Thus, identifying a gameplay event associated with the audio asset may be achieved by identifying which audio assets are linked to events. Thus, in this embodiment, the modulation profiles can be varied or modified based on different stages of gameplay or gameplay event.

In some embodiments, the audio data corresponds to a plurality of audio assets. For example, the audio data comprises data representative of an audio signal that combines two or more audio assets, such as a background music audio asset and a sound effect audio asset. Thus, the plurality of frequency bands may be considered as "combined" frequency bands including signals of the plurality of audio assets. The modulation profile may be applied across the combined signal, thereby reducing the number of computations required to modulate the audio data.

In some embodiments, the plurality of audio assets comprises a first audio asset, a second audio asset, and a third audio asset; and the plurality of frequency bands comprises a first plurality of frequency bands associated with the first audio asset, and a second plurality of frequency bands associated with the second audio asset and the third audio asset. In this way, a first loudness level may be determined for the first plurality of frequency bands, and a second loudness level may be determined for the combined plurality of frequency bands. Furthermore, first modulation profiles may be selected and applied to each frequency band of the first plurality of frequency bands and second modulation profiles may be selected and applied to each frequency band of the second plurality of frequency bands. Advantageously, these second and third audio assets may be effectively "combined" into a single audio asset, thereby reducing the computation required to select and apply modulation profiles to the frequency bands.

In some embodiments, the method further comprises: determining that a scene volume exceeds a volume threshold; and modifying the modulation profiles based on an importance of the plurality of audio assets. Advantageously, more important audio assets are more distinguishable over less important audio assets.

In some embodiments, the modulation profiles are gain curves, defining a gain to be applied dependent on a hearing loss value. In this way, there may be no reduction in amplitude for any frequency band. Advantageously, there may be a minimal loss of audio quality.

Preferably, each modulation profile comprises a non-zero gain value for all non-zero hearing loss values. In this way, all frequency bands are modulated or boosted. As discussed above, in the context of video game audio, the audio is meticulously curated, with each sound element intentionally included to enhance the gaming experience. Since each modulation profile originates at the origin, all frequency bands may be modulated or boosted. Advantageously, audio quality may be improved without sacrificing any audio elements.

In some embodiments, the hearing loss profile is an audiogram. Advantageously, users who have access to an audiogram may use the audiogram, which is tailored to their specific hearing loss profile, thereby providing a greater quality of modified video game audio for that particular user.

In some embodiments, the method further comprises receiving a user selection of a hearing loss profile from a plurality of premade hearing loss profiles. **In** this way, users having no access to an audiogram may still select a hearing loss profile.

In some embodiments, wherein receiving a user selection of the hearing loss profile comprises: outputting, for each frequency band of the plurality of frequency bands, test audio across a range of amplitudes; receiving a user input indicative of the user's sensitivity at each frequency band; and selecting a hearing loss profile from a plurality of premade hearing loss profiles based on the user input. In this way, the hearing loss profile may be tailored to a specific user even if that user does not have access to an audiogram, thereby providing a greater quality of modified game audio even without an audiogram.

In some embodiments, obtaining the hearing loss profile associated with the user comprises: receiving a user input indicative of the hearing loss profile. In this way, a user can input their own hearing loss profile. Advantageously, increased customisation of hearing loss profiles may be provided.

In some embodiments, obtaining a modulation profile comprises inputting the determined loudness into a modulation function, the modulation function defining a gain value as a function of loudness. The modulation function may be continuous such that a gain value can be provided for any frequency and loudness.

In some embodiments, obtaining a modulation profile comprises selecting a modulation curve, each modulation curve corresponding to a discrete loudness level. In some embodiments, determining, for each frequency band of the plurality of frequency bands, a respective loudness level comprises: obtaining an energy of the audio data within the frequency band; and selecting the loudness level from a plurality of discrete loudness levels based on the energy of the frequency band. In some embodiments, selecting the loudness level based on the energy of the frequency band comprises: identifying a first loudness level from a plurality of predetermined loudness levels, the first loudness level covering the energy of the frequency band; and selecting the first loudness level as the loudness level for the frequency band. Advantageously, the loudness level of the frequency band may be more easily categorized.

In some embodiments, determining the discrete loudness level comprises: identifying a first loudness level from a plurality of predetermined discrete loudness levels; identifying a second loudness level from the plurality of predetermined discrete loudness levels; wherein the energy of the frequency band is between the first loudness level and the second loudness level; and wherein selecting the modulation profile comprises interpolating a first modulation profile associated with the first loudness level and a second modulation profile associated with the second loudness level to obtain an interpolated modulation profile. In this way, when discrete loudness levels are used, an interpolated modulation profile may be obtained when the energy of a frequency band is between ranges covered by separate discrete loudness levels. Advantageously, a more accurate gain value may be obtained.

In some embodiments, obtaining the energy of the frequency band comprises: calculating a Root Mean Square (RMS) value of the frequency band. More specifically, the RMS value of the band-limited audio signal is calculated. Since the frequency band comprises positive and negative amplitude values, the RMS value can provide a more meaningful measure of the energy of the frequency band.

In some embodiments, the energy of the frequency band is obtained from the audio data. In this embodiment, the energy of the frequency band may be present in the audio data associated with that frequency band, for example as metadata. Advantageously, this embodiment may require no calculations at runtime, thereby saving computational resources at runtime.

In some embodiments, applying, to each frequency band of the plurality of frequency bands, the respective modulation profiles comprises: obtaining hearing loss values corresponding to a plurality base frequencies of the frequency band; obtaining gain values from the modulation corresponding to the hearing loss values of the base frequencies; and obtaining gain values corresponding to other frequencies of the frequency band by interpolating the gain values associated with neighbouring base frequencies. The base frequencies may be discrete frequency values distributed across the frequency band. The other frequencies may be frequencies in the frequency band other than the base frequencies. In this way, gain values may be obtained from the modulation profile for only the base frequencies, and the gain values for the other frequencies may be obtained by interpolation of neighbouring base frequency gain values. Advantageously, computational resources may be saved.

In some embodiments, applying, to each frequency band of the plurality of frequency bands, the respective modulation profiles comprises: determining an average hearing loss value for the frequency band; obtaining a gain value from the modulation profile corresponding to the average hearing loss value; and applying the gain value across the whole frequency band. Advantageously, computing resources may be saved because a single gain value is applied across the whole frequency band.

In some embodiments, applying, to each frequency band of the plurality of frequency bands, the respective modulation profiles comprises: obtaining, from the hearing loss profile, a hearing loss value for each frequency value of the frequency band; obtaining, for each hearing loss value, a corresponding gain value from the modulation profile; and applying the gain value to the frequency. Advantageously, audio quality may be further improved because each frequency of the frequency band may be boosted according to the user's hearing loss at that frequency.

In some embodiments, the method further comprises: receiving a user selection of the period of time over which the audio segment spans. In this way, the period of time over which the audio segment spans can be modified by the user.

In another aspect of the invention, there is provided a non-transitory storage medium comprising instructions that when executed by a processor cause the processor to perform the method of the first aspect. The processor may comprise a central processing unit (CPU).

In another aspect of the invention, there is provided a computer program comprising instructions that when executed by a processor cause the processor to perform the method of the first aspect. The processor may comprise a central processing unit (CPU).

In another aspect of the invention, there is provided a video gaming system for modifying video game audio, the system comprising a processor and being configured to perform the method of the first aspect.

### BRIEF DESCRIPTION OF DRAWINGS

Figure 1 illustrates an example video gaming system configured to implement methods disclosed herein;
Figure 2 illustrates a method flow diagram of a method according to the present invention;
Figure 3 illustrates an example audiogram showing a user's hearing threshold across different frequencies; and
Figure 4 illustrates a plot of example modulation profiles.

### DETAILED DESCRIPTION

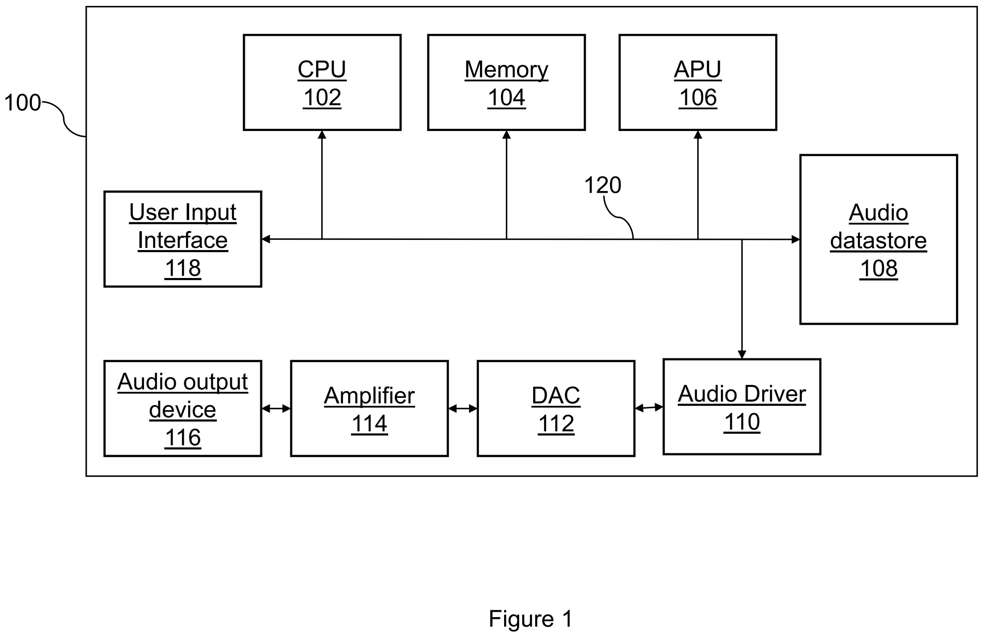

Figure 1 illustrates an example video gaming system 100 configured to implement methods disclosed herein.

The system 100 comprises a central processing unit (CPU) 102; a memory 104; an audio processing unit (APU) 106; an audio datastore 108; audio drivers 110; a digital-to-analogue converter (DAC) 112; an amplifier 114; and an audio output device 116. The system 100 further comprises a system bus 120 arranged to communicatively couple the CPU 102; the memory 104; the APU 106; the audio datastore 108; and the audio driver 110. The system 100 may further comprise other components typical to a video gaming system, such as a user input interface 118 arranged to facilitate communication with a user input device (not shown), such as a video game controller. The system 100 is typically in communication with a network (not shown).

The CPU 102 is arranged to control operation of the system 100. The CPU 102 is in communication with the memory 104 and is arranged to load instructions stored on the memory 104 in order to cause the CPU 102 to perform the methods disclosed herein. The memory 104 may include one or more volatile or non-volatile storage devices, such as random-access memory (RAM), dynamic RAM (DRAM), and/or any other suitable storage medium comprising instructions that when executed by the CPU 102, cause the CPU 102 to perform the method steps disclosed herein. The memory 104 also comprises one or more game files comprising game logic that when executed by the CPU 102, cause the CPU to manage and process audio data.

The APU 106 is arranged to be controlled by the CPU 102. For example, the APU 106 comprises an APU driver (not shown) for controlling operation of the APU 106 to facilitate execution of the methods disclosed herein. The CPU 102 provides audio processing instructions to the APU 106 to process and manage audio data. The APU 106 carries out various tasks, including processing audio signals, managing audio channels, and facilitating high-quality audio output.

The CPU 102 is coupled to the audio datastore 108 such that the CPU 102 can read and write data to the audio datastore 108. The audio datastore 108 may include one or more volatile or non-volatile storage devices, such as random-access memory (RAM), dynamic RAM (DRAM), and/or any other suitable storage medium. The audio datastore 108 may be associated with the memory 104. The audio datastore 108 is arranged to store audio data representative of various audio assets of a particular video game. These audio assets typically comprise but is not limited to comprising sound effect assets; music assets; dialogue assets; and ambient sound assets. Some assets, such as the music assets, may be directly streamed via an input device, such as a disk drive comprising a disk, or the network. The audio assets may be stored according to the Audio Definition Model (ADM) format, such that the audio data includes metadata information such as audio channels, audio positioning, and rendering information.

The audio driver 110 is arranged to facilitate communication between software components and hardware components. The audio driver 110 is arranged to provide data transfer and format conversion. The audio driver 110 receives audio data from the APU 106, performs one or more format conversion operations, and provides digital audio signals to the DAC 112.

The DAC 112 is arranged to receive digital audio signals and convert the digital audio signals into analogue audio signals suitable for output. The DAC 112 receives the digital audio signals from the audio driver 110, converts the digital audio signals into analogue audio signals, and outputs the analogue audio signals to the amplifier 114.

The amplifier 114 is arranged to receive the analogue signals from the amplifier 114 and boosts the analogue audio signals to a level suitable for driving the audio output device 116. The amplifier 114 is particularly useful in the present invention which requires different levels of audio boosting for different frequency bands.

The audio output device 116 is arranged to receive the boosted analogue audio signals from the amplifier 114 and generate sound waves based on these boosted analogue audio signals. The audio output device 116 could be any device suitable for generating sound waves. For example, the audio output device 116 could be a speaker 116 or a headset 116.

It will be understood that the system 100 is not limited to these components and typically includes other features, such as a GPU (not shown) arranged to be controlled by the CPU 102. For example, the CPU 102 comprises a GPU driver (not shown) for controlling operation of the GPU to facilitate execution of various graphics processing operations. Typically, the CPU 102 provides graphics rendering instructions to the GPU. To process the graphics rendering instructions, the CPU 102 controls the GPU to perform the rendering of graphics data. These graphics rendering instructions conform to a graphics application programming interface (API) such that the GPU can efficiently implement graphics rendering steps. The GPU comprises a GPU memory (not shown) arranged to store visual data such as textures, geometry, and other graphical assets. The GPU memory includes, for example, video random access memory (VRAM). The GPU may additionally carry out some audio processing tasks, for example for spatial audio in 3D environments.

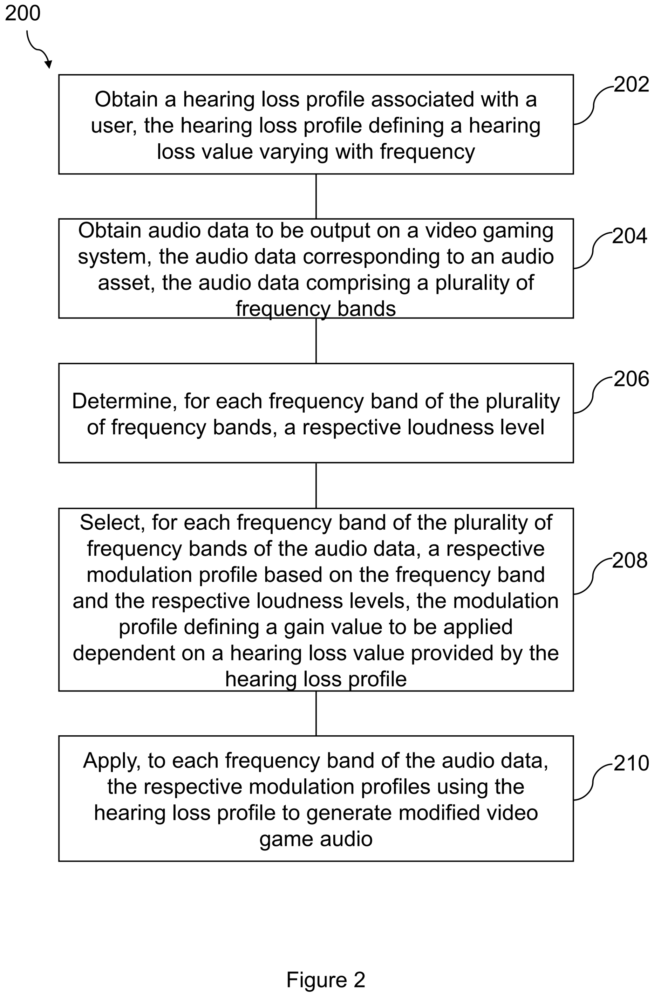

Figure 2 illustrates a method flow diagram of a method according to the present invention. More particularly, Figure 2 illustrates a computer implemented method 200 for modifying video game audio using the video gaming system 100. One or more steps of the method 200 are implemented by the CPU 102 and other components of the system 100.

Step 202 comprises obtaining a hearing loss profile associated with a user, the hearing loss profile defining a hearing loss value varying with frequency.

The hearing loss profile is a representation of the user's hearing ability at different frequencies. More particularly, the hearing loss profile describes the user's hearing sensitivity at various frequencies or frequency bands.

In some implementations, the hearing loss profile is an audiogram. The audiogram is represented as data through a set of numerical values that correspond to hearing thresholds at various frequencies for both ears. The hearing thresholds correspond to the lowest intensity of sounds that the user can hear across a range of frequencies. Respective hearing thresholds are associated with the left ear and the right ear. Using a 125 Hz frequency as an example, a first hearing threshold associated with the user's left ear may be 20 dB, whilst a second hearing threshold associated with the user's right ear may be 25 dB. This implementation is useful for users who have access to an audiogram.

Obtaining the audiogram associated with the user could comprise: accessing a memory (e.g., the memory 104) and extracting the audiogram data. The user could upload an audiogram file (for example, a CSV file) to the video gaming system 100 (i.e., the memory 104) and subsequently interact with the UI to select the audiogram.

In an alternative implementation, the hearing loss profile is a hearing loss profile selected from a plurality of premade or preset hearing loss profiles. The plurality of premade hearing loss profiles are predetermined according to a range of different hearing loss profile types. For example, a first premade hearing loss profile may comprise hearing thresholds that are higher at higher frequencies, and lower at lower frequencies. This first premade hearing loss profile may be particularly suitable for users with tinnitus, because higher frequency sounds may be obscured or masked by the tinnitus, thereby negatively affecting the user's ability to hear these higher frequency sounds. A second premade hearing loss profile may comprise a hearing threshold that is higher at lower frequencies and lower at higher frequencies. It will be appreciated that these first and second premade hearing loss profiles are by way of example only, and there may be many more premade hearing loss profiles. This implementation is useful for users who may not have access to an audiogram.

In this alternative implementation, the step of obtaining 202 the hearing loss profile associated with the user could comprise: receiving a user selection of a hearing loss profile from a plurality of premade hearing loss profiles. Receiving a user selection of the hearing loss profile comprises: outputting, via the audio output device 116, for each frequency band of a plurality of frequency bands, test audio across a range of amplitudes; receiving a user input indicative of the user's sensitivity at each frequency band; and selecting a hearing loss profile from a plurality of premade hearing loss profiles based on the user input. The plurality of amplitudes could be discrete or continuous. The video gaming system 100 instructs the user to provide the user input to the video game controller when the user detects (i.e., hears) the output sound. Based on these user inputs, the video gaming system can select a premade hearing loss profile that is the closest match to the user's hearing loss profile.

For example, for the test audio of a first frequency band (e.g., 20 Hz to 250 Hz), the system 100 gradually increases the amplitude until the user provides the user input (i.e., when they hear the test audio). This user input is indicative of the user's sensitivity at this first frequency band.

In a further alternative implementation, the hearing loss profile is input by the user. In this implementation, the step of obtaining 202 the hearing loss profile associated with the user comprises: receiving a user input indicative of the hearing loss profile. For example, the video gaming system 100 may provide an interface for the user to input their hearing loss threshold across different frequencies.

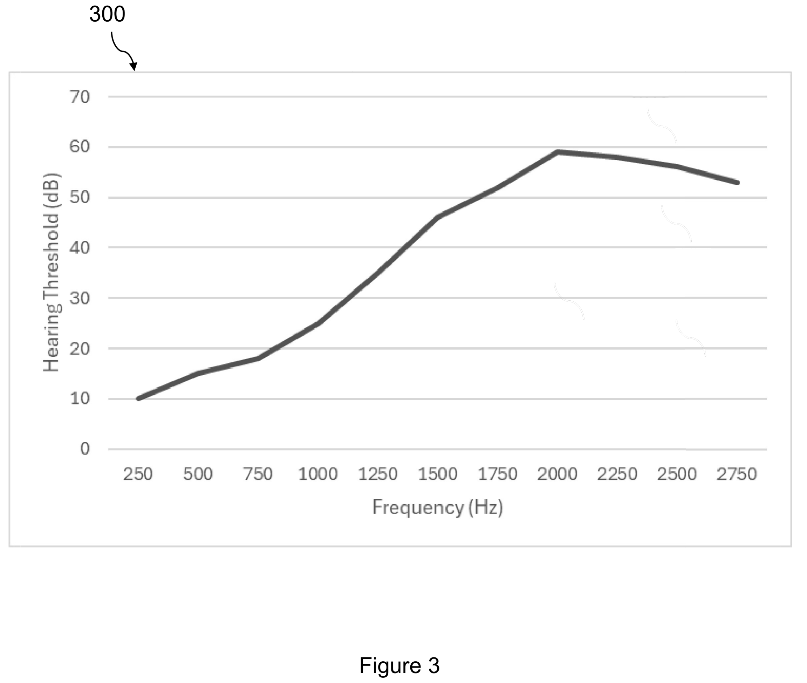

Figure 3 illustrates an example hearing loss profile 300 showing a user's hearing loss across different frequencies. It will be appreciated that the hearing loss profile is simplified and depicts the user's hearing threshold for only a single ear. The method 200 is applied using a hearing loss profile for each ear for a stereo audio output. In some implementations, for example for mono audio playback or loudspeaker playback, the hearing loss profile for both ears is averaged to produce the hearing loss profile used in the present method.

Step 204 comprises obtaining audio data to be output on a video gaming system, the audio data corresponding to an audio asset, the audio data comprising a plurality of frequency bands. The processor 102 obtains 204 the audio data from the audio datastore 108.

A video game (more particularly video game files) typically comprises a plurality of audio assets including, but not limited to, a background music asset, a sound effect asset, a dialogue asset, and an ambient sound asset. These audio assets comprise audio data representative of a signal comprising a plurality of frequency bands. The amplitude or energy of each of the frequency bands can vary over time. The range of frequencies used in video game audio typically spans from 20 Hz to 20 kHz. There may be any number of frequency bands. In an example implementation, there are 6 frequency bands spanning the range of frequencies of a particular audio asset. Each frequency band could vary in size such that one frequency band covers a greater range of frequency values than another frequency band. For example, a first frequency band could cover a range of low frequencies from 20 Hz to 250 Hz and a second frequency band could cover a range of high frequencies from 4 kHz to 20 kHz. Alternatively, each frequency band could be of equal size such that one frequency band covers a range of frequencies equal in size to another frequency band.

In a simplified example, there is a first frequency band and a second frequency band. The first frequency band (herein the "low" frequency band) comprises frequencies less than 4 kHz. The second frequency band (herein the "high" frequency band) comprises frequencies greater than or equal to 4 kHz and less than 8 kHz. It will be understood that these frequency bands are for illustration purposes only, and there would typically be a greater number of frequency bands spanning different ranges of frequencies.

In some implementations, the audio data corresponds to a plurality of audio assets. In such implementations, the plurality of frequency bands can form a combined audio signal representative of the plurality of audio assets. For example, the audio data can correspond to a background sound audio asset and an ambient sound audio asset.

In further implementations, the plurality of audio assets comprises a first audio asset, a second audio asset, and a third audio asset. For example, the first audio asset may be a dialogue audio asset, the second audio asset may be a background sound audio asset, and the third audio asset may be an ambient sound audio asset. The plurality of frequency bands comprises a first plurality of frequency bands associated with the first audio asset, and a second plurality of frequency bands associated with the second audio asset and the third audio asset. Thus, the audio data comprises a first audio signal representative of the first audio asset (i.e., the dialogue audio asset) and a second audio signal representative of the second audio asset and the third audio asset (i.e., the background sound audio asset and the ambient sound audio asset). Thus, the second audio asset and the third audio asset may be considered combined audio assets. The first audio asset may be distinguished from the second and third audio assets by an importance indicator indicative of the first audio asset being more important than the second and third audio assets.

Step 206 comprising determining, for each frequency band of the plurality of frequency bands, a respective loudness level. The "loudness level" describes an energy or "loudness" of the frequency band of the audio segment over the period of time.

Determining, for each frequency band of the plurality of frequency bands, a respective loudness level, could comprise: obtaining an energy of the audio data within the frequency band; and selecting the loudness level from a plurality of discrete loudness levels based on the energy of the frequency band. Each loudness level covers a respective range of energies. The "energy" may be understood as a representation of the "loudness" level of a frequency band over the period of time, as discussed further below.

In an example, the plurality of predetermined loudness levels comprises a first loudness level and a second loudness level. The first loudness level represents a first range of energy values, and the second loudness level represents a second range of energy values. The second range of energies spans a range of energy values having a greater magnitude than the range of energy values of the first range of energies. Thus, the first loudness level represents a "quiet" loudness level, and the second loudness level represents a "loud" loudness level. It will be understood that there may be any number of loudness levels, each representing a respective range of energy values.

In some implementations, determining 206, for each frequency band of the plurality of frequency bands, the respective loudness level comprises determining, for each frequency band of the plurality of frequency bands, an energy of the frequency band and selecting the loudness level based on the energy of the frequency band. This implementation typically occurs at runtime.

In one implementation, to obtain the energy of a particular frequency band, the CPU 102 calculates a Root Mean Square (RMS) value of the frequency band over a period of time. In this implementation, for a particular frequency band, the audio data may comprise a series of discrete amplitude values distributed over the period of time. The CPU 102 calculates the RMS value of the series of discrete magnitude values of the audio data for the frequency band. Thus, in this implementation, determining, for each frequency band of the plurality of frequency bands, the energy of the frequency band comprises: calculating an RMS value of the magnitude values of the frequency band. Calculating the RMS value of the magnitude values provides an average energy over the period of time.

Continuing with this implementation, to select the loudness level based on the energy of the frequency band, the CPU 102 identifies which of the plurality of predetermined loudness levels covers the energy of the frequency band. Thus, in this implementation, selecting, for each frequency band of the plurality of frequency bands, the loudness level based on the energy of the frequency band comprises: identifying which of the plurality of predetermined loudness levels covers the energy of the frequency band.

In an alternative implementation, the audio data comprises data that is representative of the energy of a particular frequency band. In this implementation, the energy of a particular frequency band is predetermined and included as part of the game data. Thus, the energy of the frequency band is obtained from the audio data. In this implementation, the energy of a particular frequency band may also have been determined by calculating an RMS value of the frequency band over the period of time. In an alternative implementation, the energy of a particular frequency band could be assigned based on a user-assigned value. For example, a video game designer may manually assess the loudness of a particular frequency band and assign an appropriate loudness level.

Continuing with the example, the loudness level of the low frequency band is determined 206 to be the first loudness level (herein the "quiet" loudness level), for example because the energy of the low frequency band is determined to fall within the range of the first loudness level. The loudness level of the high frequency band is determined to be a second loudness level (herein the "loud" loudness level), for example because the energy of the high frequency band is determined to fall within the range of the second loudness level.

As discussed above, in some implementations the plurality of audio assets comprises the first audio asset, the second audio asset, and the third audio asset, and the plurality of frequency bands comprises a first plurality of frequency bands associated with the first audio asset, and a second plurality of frequency bands associated with the second audio asset and the third audio asset. In such implementations, a respective (e.g., a first) loudness level is determined for the first plurality of frequency bands, and a respective (e.g., a second) loudness level is determined for the second (i.e., combined) plurality of frequency bands. Thus, a single loudness level is selected for the combined frequency bands of the second and third audio assets, thereby reducing the amount of computation.

Step 208 comprises selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile.

The modulation profile is a gain curve configured to provide a gain value to be applied for a particular hearing loss level. Each modulation profile comprises a non-zero gain value for all non-zero hearing loss values. For example, each gain curve originates at the origin. Therefore, every frequency is boosted.

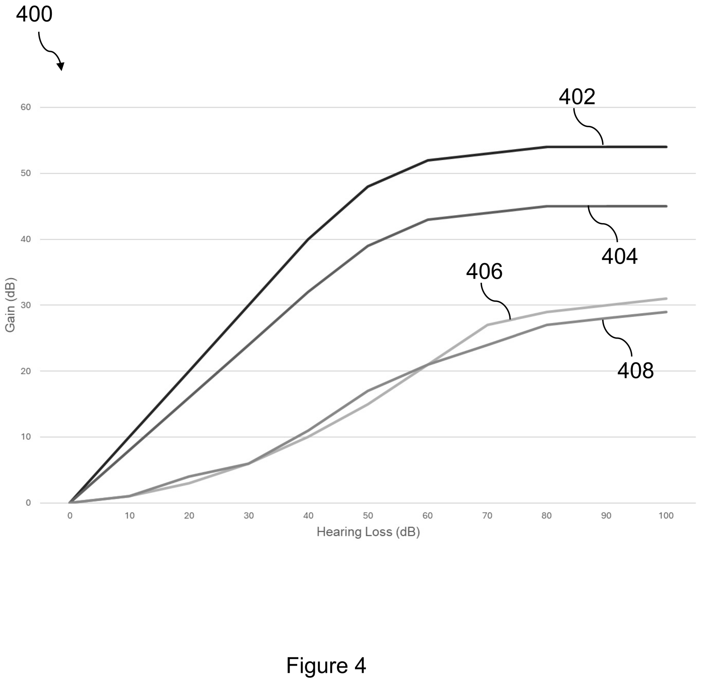

Figure 4 shows a plot 400 of example modulation profiles. The modulation profiles comprise a first modulation profile 402; a second modulation profile 404; a third modulation profile 406; and a fourth modulation profile 408. The first modulation profile 402 is for a first frequency band (e.g., a low frequency band) at a first loudness level (e.g., a "quiet" loudness level). The second modulation profile 404 is for a second frequency band (e.g., a high frequency band) at the quiet loudness level. The third modulation profile 406 is for the low frequency band at a second loudness level (e.g., a "loud" loudness level). The fourth modulation profile 408 is for the high frequency band at the loud loudness level. Each modulation profile originates at the origin so that every frequency is boosted.

The modulation profiles are selected 208 for each frequency band based on the loudness level determined for the frequency band in step 206.

Continuing with the example, in step 206 the loudness level of the low frequency band was determined to be the loud loudness level, and the loudness level of the high frequency band was determined to be the quiet loudness level. Therefore, the third modulation profile 406 is selected 208 for the low frequency band and the second modulation profile 404 is selected for the high frequency band.

As discussed above, in some implementations the plurality of audio assets comprises the first audio asset, the second audio asset, and the third audio asset, and the plurality of frequency bands comprises a first plurality of frequency bands associated with the first audio asset, and a second plurality of frequency bands associated with the second audio asset and the third audio asset. In such implementations, respective (e.g., first) modulation profiles are selected for the first plurality of frequency bands, and respective (e.g., second) modulation profiles are selected for the second (i.e., combined) plurality of frequency bands.

In some implementations, the method 200 comprises: identifying an audio asset type of the audio asset; and modifying the modulation profiles based on the audio asset type. The "audio asset type" may refer to a type, or intended use, of the audio asset. Example types of audio asset include sound effect audio assets, music track audio assets, and dialogue audio assets. It will be appreciated that many more audio asset types exist. Modifying the modulation profiles refers to altering or varying the modulation profiles that have been selected, depending on the audio asset type. For example, a scene of a video game may comprise a dialogue audio asset and a music track audio asset. The dialogue audio asset may be more "important" than the music track audio asset and as such, the dialogue audio asset may be boosted or otherwise modulated in a manner which increases a contrast in loudness between the audio assets. In this way, different audio assets can be boosted or modulated depending on the type of audio asset. Advantageously, some audio assets may be prioritised over other audio assets.

In some implementations, identifying the audio asset type of the audio asset comprises analysing the audio data. For example, metadata of the audio asset audio data may explicitly indicate the audio asset type. In such cases, analysing the audio data may comprise parsing the metadata to extract the audio asset type. In other implementations, the metadata may not explicitly indicate the audio asset type. In these implementations, analysing the audio data comprises applying an audio asset type identification algorithm to the audio data. For example, a trained machine learning model may take, as input, properties of the audio data, and output a classification indicative of the type of audio asset. The properties of the audio data may include, but is not limited to including, a duration (typically short for sound effect audio assets and longer for background music audio assets) of the audio asset; a frequency content of the audio asset; and a tempo of the audio asset. Alternatively, a convolutional neural network may take an input spectrogram and output a classification indicative of the type of audio asset.

Modifying the modulation profiles based on the audio asset type could be based on a user-selected boost setting. For example, the video gaming system may present an option menu to the user as part of a main screen, the option menu comprising a plurality of pre-made boost settings. One such pre-made boost setting could be a "voice boost". When the user selects a pre-made boost setting (such as the voice boost), the modulation profiles are modified accordingly. For example, a constant gain is applied if the audio asset is a dialogue audio asset. Alternatively, a variable gain may be applied. In implementations where there are multiple audio assets (e.g., the first audio asset and the second audio asset), the user-selected boost setting is used to modify the first audio asset and the second audio asset accordingly. Continuing with the example of the pre voice boost setting, if the first audio asset is a dialogue audio asset and the second audio asset is a background music audio asset, the first audio asset is boosted (i.e., the modulation profile to be applied to the first audio asset) more than the second audio asset. For example, a +10 dB boost could be applied to the modulation profile to be applied to the first audio asset, whilst no change is applied to the modulation profile to be applied to the second audio asset.

In some implementations, the method further comprises: obtaining spatial data associated with the audio asset; and modifying the modulation profiles based on the spatial data prior to applying, to each frequency band of the audio data, the respective modulation profiles using the hearing loss profile to generate modified video game audio. The spatial data is typically obtained via run-time game data, or a software development kit (SDK) associated with the video game system, both of which provide a position (e.g., a 3D vector) linked to an audio source. The game files comprising the audio asset may also include positioning data linking the audio asset to an in-game object or event. The positioning data provides spatial data indicating a 3D position of the object and, by extension, the audio asset. This embodiment may be of particular utility in a 3D audio context.

In such implementations, modifying the modulation profiles associated with the audio asset comprises: determining a field of view (FOV); and modifying the modulation profiles based on the FOV and the spatial data. More particularly, modifying the modulation profile based on the FOV and the spatial data comprises: determining that a position of an audio source associated with the audio asset corresponds to the FOV; and applying a boost to the modulation profiles. The FOV is a FOV of the player and is typically defined as a cone or frustum originating from the player's viewpoint. An angle of this cone or frustum is dependent on a FOV angle (typically predefined). Objects or other features present in this cone or frustum are in the user's FOV. The position of the audio source corresponds to the FOV when the position of the audio source is within this cone or frustum. One example means for determining that a position of the audio source corresponds to the FOV is to: compute a view vector; compute a source vector; compute an angle between the view vector and the source vector; and determine that the angle is less a threshold defined by the FOV. The view vector is the direction in which the player is facing, originating from the player's position. The source vector is a vector from the user's position to the audio source's location. The threshold could be half the FOV angle. The boost applied to the modulation profile could be a constant boost (e.g., 10 dB) across the whole modulation profile.

Thus, in this implementation, audio sources within the user's FOV are boosted such that the audio is more distinguishable than if the audio source was not within the user's FOV. Audio sources within the user's FOV are typically more important and as such, boosting these audio sources can improve the user's experience.

In some implementations, the method further comprises: identifying that the audio asset is associated with a gameplay event; and modifying the modulation profiles prior to applying, to each frequency band of the audio data, the respective modulation profiles using the hearing loss profile to generate modified video game audio. The game files comprising the audio asset may also include timeline or sequence assets that control the timing and synchronization of the audio asset with gameplay events. The gameplay event could be, for example, the presence of a new enemy. Identifying that the gameplay event is associated with the audio asset can be achieved by obtaining an indicator indicative of the gameplay event from the audio asset. For example, the audio asset data may be tagged with an indicator by a sound designer during development. Thus, in this implementation, audio assets that are identified as being associated with a gameplay event can be boosted. The boost applied to the modulation profile could be a constant boost (e.g., 10 dB) across the whole modulation profile. Thus, in this embodiment, the modulation profiles can be varied or modified based on different stages of gameplay or gameplay event. Such audio assets associated with gameplay events may be more important to the gameplay experience than other audio assets and as such, boosting such audio assets may improve the user experience. Notably, even if the audio asset is associated with an audio source that is not within the user's FOV, it can still be boosted.

As discussed above, in some implementations the plurality of audio assets comprises the first audio asset, the second audio asset, and the third audio asset, and the plurality of frequency bands comprises a first plurality of frequency bands associated with the first audio asset, and a second plurality of frequency bands associated with the second audio asset and the third audio asset. In such implementations, respective (e.g., first) modulation profiles may be modified for the first plurality of frequency bands, and respective (e.g., second) modulation profiles may be separately modified for the second (i.e., combined) plurality of frequency bands. For example, the first audio asset may be distinguished from the second and third audio assets by an importance indicator indicative of the first audio asset being more important than the second and third audio assets. In such cases, modification of the first plurality of frequency profiles can include applying a gain boost that is greater than the gain boost applied to the second plurality of frequency profiles. Thus, the first audio asset may be boosted to a greater extent than the second and third audio assets, thus improving user experience.

In some implementations, the method 200 further comprises: determining that a scene volume exceeds a volume threshold; and modifying the modulation profiles based on an importance of the plurality of audio assets. The "scene volume" refers to an aggregated volume for all of the plurality of audio assets in a particular video game scene. The volume threshold may be pre-set to distinguish between a quiet scene and a loud scene. In particular, when the scene volume exceeds the volume threshold, it is determined to be a "loud" scene. For example, a fight scene may contain a greater number of sound effect assets than another scene, and thus the volume of the fight scene may exceed the volume threshold. In such instances, it is preferable that some audio assets, such as dialogue audio assets, are prioritised over other assets, such as ambient music audio assets. Modifying the modulation profiles based on an importance (e.g., as flagged by an audio designer) may involve reducing the boost provided by modulation profiles associated with audio assets of lower importance. Thus, more important audio assets are more distinguishable over less important audio assets.

Step 210 comprises applying, to each frequency band of audio data, the respective modulation profiles using the hearing loss profile to generate modified video game audio.

The hearing loss profile is used to determine the hearing loss value for the frequency band and the hearing loss value is used to determine a corresponding gain value from the modulation profile.

In a first implementation, applying, to each frequency band of the plurality of frequency bands, the respective modulation profiles comprises: obtaining hearing loss values corresponding to a plurality base frequencies of the frequency band; obtaining gain values from the modulation corresponding to the hearing loss values of the base frequencies; and obtaining gain values corresponding to other frequencies of the frequency band by interpolating the gain values associated with neighbouring base frequencies. The base frequencies or anchor frequencies are discrete frequency values distributed across the frequency band. These base frequencies are typically equally distributed across the frequency band. For example, if a frequency band spans the range of 50 Hz to 500 Hz, and there are 6 base frequencies, the base frequencies could be 50 Hz, 140 Hz, 230 Hz, 320 Hz, 410 Hz, and 500 Hz. The other frequencies are frequencies in the frequency band other than the base frequencies. The gain values corresponding to the base frequencies can be obtained by determined the gain value from the modulation profile corresponding to the loudness level of the frequency band. The gain values corresponding to the other frequencies of the frequency band are obtained by interpolating neighbouring gain values. For example, to obtain the gain value for a frequency of 95 Hz, the gain values associated with the base frequencies of 50 Hz and 140 Hz are interpolated.

In an alternative implementation, an average hearing loss value is determined for the frequency band and a corresponding gain value for the average hearing loss value is applied across the whole frequency band. In a simplified example, if a first frequency band comprises hearing loss values of 25 dB, 30 dB, and 35 dB, the average hearing loss value would be 30 dB. The gain value corresponding to the average hearing loss value is applied across the whole frequency band. Using the low frequency band as an example, the third modulation profile 406 was selected in step 208 and so a gain of around 5 dB would be applied if the average hearing loss value was 30 dB. Using the high frequency band as an example, the second modulation profile 404 was selected in step 208 and so a gain of around 25 dB would be applied if the average hearing loss value was 30 dB. This implementation is computationally inexpensive because a single gain value is obtained and applied across the frequency band. It will be appreciated that this gain value is an approximate gain value because a single gain value is applied across the frequency band.

In a further alternative implementation, a hearing loss value for each frequency value of the frequency band is obtained from the hearing loss profile, and a corresponding gain value for the frequency value is applied to the frequency value. This implementation is more computationally expensive than the first implementation because a gain value is obtained for each frequency value of the frequency band. However, this implementation provides a higher quality output.

After applying 210 the respective modulations profiles to each frequency band, modified video game audio is generated. All frequency bands of the initial video game audio have been boosted because each modulation profile originates at the origin. Since each modulation profile provides a different gain value depending on the hearing loss value for different frequency bands or frequencies, and the loudness level of the frequency bands, each frequency band or frequency is boosted by a different amount.

In the present example, the loudness level of the low frequency band is the loud loudness level so the third modulation profile 406 is used. The loudness level of the high frequency band is the quiet loudness level so the second modulation profile 404 is selected for the high frequency band. As shown in Figure 4, the second modulation profile 404 provides a greater boost than the third hearing loss profile 406 and so the low frequency band is boosted more than the high frequency band.

As discussed above, in implementations the plurality of audio assets comprises the first audio asset, the second audio asset, and the third audio asset, and the plurality of frequency bands comprises a first plurality of frequency bands associated with the first audio asset, and a second plurality of frequency bands associated with the second audio asset and the third audio asset. In such implementations, modified video game audio associated with the first audio asset may be routed to a first audio output device (for example, a centre channel of a 7.1.4 loudspeaker feed), and modified video game audio associated with the second and third audio assets may be routed to a second audio output device (for example, four ceiling speakers or channels of a 7.1.4 feed). Therefore, computation is reduced. For example, in the 7.1.4 feed context, instead of carrying out a computation for each channel, a computation for a plurality of channels is combined (e.g., computation associated with the second and third audio assets).

The method 200 provides modified video game audio in which all sounds are boosted to some degree, the amount by which certain frequencies are boosted depending on the hearing loss profile of the user. The modified video game audio sounds clearer and to the user and less audio information is lost when compared to the unmodified video game audio.

In some implementations, determining, for each frequency band of the plurality of frequency bands, a respective loudness level comprises: identifying a first loudness level from a plurality of predetermined discrete loudness levels; identifying a second loudness level from the plurality of predetermined discrete loudness levels; wherein the energy of the frequency band is between the first loudness level and the second loudness level; selecting a respective modulation profile comprises interpolating a first modulation profile associated with the first loudness level and a second modulation profile associated with the second loudness level to obtain an interpolated modulation profile. The interpolated modulation profile comprises a gain curve generated based on the interpolated first and second modulation profiles. Thus, if the energy of the frequency band is outside of a range associated with the first loudness level and outside of a range associated with the second loudness level, the first loudness level and the second loudness level are interpolated. In an example, the first loudness level is associated with a "quiet" modulation curve dictating a compensation gain of 10 for a certain frequency, and the second loudness level is associated with a "loud" modulation curve dictating a compensation gain of 20 for that frequency. For a "medium" energy sound, the modulation curves are interpolated, and a compensation gain of 15 is associated with that frequency.

It will be appreciated that the method 200 is applied to audio data corresponding to an audio asset obtained in step 204. Thus, the method 200 is typically repeated over time, such that the modified video game audio is re-calculated for each different video game scene. Each audio segment typically comprises different frequency bands having different loudness levels. In some cases, there may be a transient change between a loudness level of a frequency band from a first audio segment to a second audio segment. To reduce sudden increases in gain, historical loudness data may be used to smooth the determination of the loudness level (step 206).

### EMBODIMENTS

Although the present invention is defined in the claims, it should be understood that the present invention can also (alternatively) be defined in accordance with the following embodiments:
1. A computer-implemented method for modifying video game audio output using a video gaming system, the method comprising:
   obtaining a hearing loss profile associated with a user, the hearing loss profile defining a hearing loss value varying with frequency;
   obtaining audio data to be output on a video gaming system, the audio data corresponding to an audio asset, the audio data comprising a plurality of frequency bands;
   determining, for each frequency band of the plurality of frequency bands, a respective loudness level;
   selecting, for each frequency band of the plurality of frequency bands of the audio data, a respective modulation profile based on the frequency band and the respective loudness levels, the modulation profile defining a gain value to be applied dependent on a hearing loss value provided by the hearing loss profile; and
   applying, to each frequency band of the audio data, the respective modulation profiles using the hearing loss profile to generate modified video game audio.
2. The computer-implemented method of embodiment 1, further comprising:
   identifying an audio asset type of the audio asset; and
   modifying the modulation profiles based on the audio asset type prior to applying, to each frequency band of the audio data, the respective modulation profiles using the hearing loss profile to generate modified video game audio.
3. The computer-implemented method of embodiment 2, wherein identifying the audio asset type of the audio asset comprises analysing the audio data; and optionally wherein analysing the audio asset type comprises parsing metadata of the audio data to extract the audio asset type; or optionally applying an audio asset type identification algorithm to the audio data.
4. The computer-implemented method of any preceding embodiment, further comprising:
   obtaining spatial data associated with the audio asset; and
   modifying the modulation profiles based on the spatial data prior to applying, to each frequency band of the audio data, the respective modulation profiles using the hearing loss profile to generate modified video game audio.
5. The computer-implemented method of embodiment 4, wherein modifying the modulation profiles comprises:
   determining a field of view (FOV); and
   modifying the modulation profiles based on the FOV and the spatial data.
6. The computer-implemented method of any of preceding embodiment, further comprising:
   identifying that the audio asset is associated with a gameplay event; and
   modifying the modulation profiles prior to applying, to each frequency band of the audio data, the respective modulation profiles using the hearing loss profile to generate modified video game audio.
7. The computer-implemented method of any preceding embodiment, wherein the audio data corresponds to a plurality of audio assets.
8. The computer-implemented method of embodiment 7, wherein
   the plurality of audio assets comprises a first audio asset, a second audio asset, and a third audio asset; and
   the plurality of frequency bands comprises a first plurality of frequency bands associated with the first audio asset, and a second plurality of frequency bands associated with the second audio asset and the third audio asset.
9. The computer-implemented method of embodiment 7 or embodiment 8, further comprising:
   determining that a scene volume exceeds a volume threshold; and
   modifying the modulation profiles based on an importance of the plurality of audio assets.
10. The computer-implemented method of any preceding embodiment, wherein each modulation profile comprises a non-zero gain value for all non-zero hearing loss values.
11. The computer-implemented method of any preceding embodiment, wherein the hearing loss profile is an audiogram.
12. The computer-implemented method of any of embodiments 1 to 10, further comprising receiving a user selection of a hearing loss profile from a plurality of premade hearing loss profiles; and optionally wherein receiving a user selection of the hearing loss profile comprises:
   outputting, for each frequency band of the plurality of frequency bands, test audio across a range of amplitudes;
   receiving a user input indicative of the user's sensitivity at each frequency band; and
   selecting a hearing loss profile from the plurality of premade hearing loss profiles based on the user input.
13. The computer-implemented method of any of embodiments 1 to 10, wherein obtaining the hearing loss profile associated with the user comprises:
   receiving a user input indicative of the hearing loss profile.
14. The computer-implemented method of any preceding embodiment, wherein obtaining a modulation profile comprises inputting the determined loudness into a modulation function, the modulation function defining a gain value as a function of loudness.
15. The computer-implemented method of any of embodiments 1 to 13, wherein obtaining a modulation profile comprises selecting a modulation curve, each modulation curve corresponding to a discrete loudness level.
16. The computer-implemented method of embodiment 15, wherein determining the discrete loudness level comprises:
   obtaining an energy of the audio data within the frequency band; and
   selecting the loudness level from a plurality of discrete loudness levels based on the energy of the frequency band.
17. The computer-implemented method of embodiment 16, wherein selecting the loudness level based on the energy of the frequency band comprises:
   identifying a first loudness level from the plurality of predetermined loudness levels, the first loudness level covering the energy of the frequency band; and
   selecting the first loudness level as the loudness level for the frequency band.
18. The computer-implemented method of embodiment 15, wherein determining the discrete loudness level comprises:
   identifying a first loudness level from a plurality of predetermined discrete loudness levels;
   identifying a second loudness level from the plurality of predetermined discrete loudness levels;
      wherein the energy of the frequency band is between the first loudness level and the second loudness level; and
   wherein selecting the modulation profile comprises interpolating a first modulation profile associated with the first loudness level and a second modulation profile associated with the second loudness level to obtain an interpolated modulation profile.
19. The method of any preceding embodiment, wherein applying, to each frequency band of the plurality of frequency bands, the respective modulation profiles comprises:
   obtaining hearing loss values corresponding to a plurality of base frequencies of the frequency band;
   obtaining gain values from the modulation corresponding to the hearing loss values of the base frequencies; and
   obtaining gain values corresponding to other frequencies of the frequency band by interpolating the gain values associated with neighbouring base frequencies.
20. The computer-implemented method of any preceding embodiment, wherein applying, to each frequency band of the plurality of frequency bands, the respective modulation profiles comprises:
   determining an average hearing loss value for the frequency band;
   obtaining a gain value from the modulation profile corresponding to the average hearing loss value; and
   applying the gain value across the whole frequency band.
21. The computer-implemented method of any preceding embodiment, wherein applying, to each frequency band of the plurality of frequency bands, the respective modulation profiles comprises:
   obtaining, from the hearing loss profile, a hearing loss value for each frequency value of the frequency band;
   obtaining, for each hearing loss value, a corresponding gain value from the modulation profile; and
   applying the gain value to the frequency.
22. The computer-implemented method of any preceding embodiment, further comprising:
   receiving a user selection of the period of time over which the audio segment spans.
23. A non-transitory storage medium comprising instructions that when executed by a processor cause the processor to perform the method of any preceding embodiment.
24. A computer program comprising instructions that when executed by a processor cause the processor to perform the method of any of embodiments 1 to 22.
25. A video game system for modifying audio data, the system comprising a processor and being configured to perform the method of any of embodiments 1 to 22.

## Claims

1. A computer-implemented method for modifying video game audio output using a video gaming system, the method comprising:
obtaining (202) a hearing loss profile associated with a user, the hearing loss profile defining a hearing loss value varying with frequency;
obtaining (204) audio data to be output on a video gaming system, the audio data corresponding to an audio asset, the audio data comprising a plurality of frequency bands;
determining (206), for each frequency band of the plurality of frequency bands, a respective loudness level;
selecting (208), for each frequency band of the plurality of frequency bands of the audio data, a respective modulation profile based on the frequency band and the respective loudness levels, the modulation profile defining a gain value to be applied dependent on a hearing loss value provided by the hearing loss profile; and
applying (210), to each frequency band of the audio data, the respective modulation profiles using the hearing loss profile to generate modified video game audio.

2. The computer-implemented method of claim 1, further comprising:
identifying an audio asset type of the audio asset; and
modifying the modulation profiles based on the audio asset type prior to applying, to each frequency band of the audio data, the respective modulation profiles using the hearing loss profile to generate modified video game audio;
optionally wherein identifying the audio asset type of the audio asset comprises analysing the audio data; and optionally wherein analysing the audio asset type comprises parsing metadata of the audio data to extract the audio asset type; or optionally applying an audio asset type identification algorithm to the audio data.

3. The computer-implemented method of any one of the preceding claims, further comprising:
obtaining spatial data associated with the audio asset; and
modifying the modulation profiles based on the spatial data prior to applying, to each frequency band of the audio data, the respective modulation profiles using the hearing loss profile to generate modified video game audio; optionally wherein modifying the modulation profiles comprises:
determining a field of view, FOV; and
modifying the modulation profiles based on the FOV and the spatial data.

4. The computer-implemented method of any one of the of preceding claims, further comprising:
identifying that the audio asset is associated with a gameplay event; and
modifying the modulation profiles prior to applying, to each frequency band of the audio data, the respective modulation profiles using the hearing loss profile to generate modified video game audio.

5. The computer-implemented method of any one of the preceding claims, wherein the audio data corresponds to a plurality of audio assets; optionally wherein
the plurality of audio assets comprises a first audio asset, a second audio asset, and a third audio asset; and
the plurality of frequency bands comprises a first plurality of frequency bands associated with the first audio asset, and a second plurality of frequency bands associated with the second audio asset and the third audio asset;
further optionally wherein the method comprises:
determining that a scene volume exceeds a volume threshold; and
modifying the modulation profiles based on an importance of the plurality of audio assets.

6. The computer-implemented method of any one of the preceding claims, wherein:
each modulation profile comprises a non-zero gain value for all non-zero hearing loss values; and/or
the hearing loss profile is an audiogram; and/or
obtaining the hearing loss profile associated with the user comprises receiving a user input indicative of the hearing loss profile.

7. The computer-implemented method of any one of the preceding claims, further comprising receiving a user selection of a hearing loss profile from a plurality of premade hearing loss profiles; and optionally wherein receiving a user selection of the hearing loss profile comprises:
outputting, for each frequency band of the plurality of frequency bands, test audio across a range of amplitudes;
receiving a user input indicative of the user's sensitivity at each frequency band; and
selecting a hearing loss profile from the plurality of premade hearing loss profiles based on the user input.

8. The computer-implemented method of any one of the preceding claims, wherein obtaining a modulation profile comprises inputting the determined loudness into a modulation function, the modulation function defining a gain value as a function of loudness.

9. The computer-implemented method of any one of claims 1 to 7, wherein obtaining a modulation profile comprises selecting a modulation curve, each modulation curve corresponding to a discrete loudness level.

10. The computer-implemented method of claim 9, wherein determining the discrete loudness level comprises either:
obtaining an energy of the audio data within the frequency band; and
selecting the loudness level from a plurality of discrete loudness levels based on the energy of the frequency band, optionally wherein selecting the loudness level based on the energy of the frequency band comprises:
identifying a first loudness level from the plurality of predetermined loudness levels, the first loudness level covering the energy of the frequency band; and
selecting the first loudness level as the loudness level for the frequency band; or
identifying a first loudness level from a plurality of predetermined discrete loudness levels; and
identifying a second loudness level from the plurality of predetermined discrete loudness levels; wherein the energy of the frequency band is between the first loudness level and the second loudness level; and
wherein selecting the modulation profile comprises interpolating a first modulation profile associated with the first loudness level and a second modulation profile associated with the second loudness level to obtain an interpolated modulation profile.

11. The method of any one of the preceding claims, wherein applying, to each frequency band of the plurality of frequency bands, the respective modulation profiles comprises:
obtaining hearing loss values corresponding to a plurality of base frequencies of the frequency band;
obtaining gain values from the modulation corresponding to the hearing loss values of the base frequencies; and
obtaining gain values corresponding to other frequencies of the frequency band by interpolating the gain values associated with neighbouring base frequencies.

12. The computer-implemented method of any one of the preceding claims, wherein applying, to each frequency band of the plurality of frequency bands, the respective modulation profiles comprises:
determining an average hearing loss value for the frequency band;
obtaining a gain value from the modulation profile corresponding to the average hearing loss value; and
applying the gain value across the whole frequency band; or
wherein applying, to each frequency band of the plurality of frequency bands, the respective modulation profiles comprises:
obtaining, from the hearing loss profile, a hearing loss value for each frequency value of the frequency band;
obtaining, for each hearing loss value, a corresponding gain value from the modulation profile; and
applying the gain value to the frequency.

13. The computer-implemented method of any one of the preceding claims, further comprising:
receiving a user selection of the period of time over which the audio segment spans.

14. A computer program comprising instructions that when executed by a processor (102) cause the processor to perform the method of any one of claims 1 to 13.

15. A video game system (100) for modifying audio data, the system comprising a processor (102) and being configured to perform the method of any one of claims 1 to 13.
